(19) Europäisches Patentamt
European Patent Office
Office européen des brevets

(11) **EP 3 065 015 B1**

(12) **EUROPÄISCHE PATENTSCHRIFT**

(45) Veröffentlichungstag und Bekanntmachung des Hinweises auf die Patenterteilung:
**26.09.2018   Patentblatt 2018/39**

(51) Int Cl.:
***G05B 23/02*** *(2006.01)*

(21) Anmeldenummer: **15157643.6**

(22) Anmeldetag: **04.03.2015**

(54) **DIAGNOSEEINRICHTUNG UND -VERFAHREN ZUR ÜBERWACHUNG DES BETRIEBS VON REGELKREISEN**

DIAGNOSTIC DEVICE AND METHOD FOR MONITORING THE OPERATION OF CONTROL LOOPS

PROCÉDÉ ET DISPOSITIF DE DIAGNOSTIC DESTINÉS À LA SURVEILLANCE DU FONCTIONNEMENT DE CIRCUITS RÉGULATEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.09.2016   Patentblatt 2016/36**

(73) Patentinhaber: **Siemens Aktiengesellschaft 80333 München (DE)**

(72) Erfinder:
• **Heiler, Patrick**
  **68753 Waghäusel (DE)**
• **Pfeiffer, Bernd-Markus, Dr.**
  **76744 Wörth (DE)**

(56) Entgegenhaltungen:
**DE-A1- 10 212 909     US-A- 5 838 561**

## Beschreibung

Die Erfindung betrifft eine Diagnoseeinrichtung zur Überwachung des Betriebs von Regelkreisen eines Automatisierungssystems nach dem Oberbegriff des Anspruchs 1 sowie ein entsprechendes Diagnoseverfahren nach dem Oberbegriff des Anspruchs 10.

Wartung und Instandhaltung von automatisierungstechnischen Anlagen können verbessert werden, wenn die korrekte Funktion von Teilanlagen oder Komponenten überwacht wird. Bei nachlassender Funktionsfähigkeit kann gezielt an der richtigen Stelle der Anlage mit Maßnahmen zur Wartung, Instandhaltung oder Fehlerbeseitigung eingegriffen werden. Häufig werden Komponenten von automatisierungstechnischen Anlagen in Regelkreisen miteinander verschaltet. Damit bei nachlassender Leistungsfähigkeit einzelner Regelkreise rechtzeitig und gezielt an der richtigen Stelle der Anlage mit Maßnahmen zur Instandhaltung oder Regleroptimierung eingegriffen werden kann, wäre es von Vorteil, wenn Regelkreise permanent und automatisch bezüglich ihrer Regelgüte überwacht würden.

Ein Diagnoseverfahren zur Überwachung des Betriebs eines Regelkreises ist bereits aus der EP 1 528 447 B1 bekannt. Im Falle eines im Wesentlichen stationären Zustands, d. h. bei weitgehend konstanter Sollwertvorgabe, wird die Varianz einer Folge von Istwert-Daten als stochastisches Merkmal bestimmt und für eine Analyse des Zustands des Regelkreises ausgewertet. Im Falle einer Anregung des Regelkreises entsprechend einem Sollwertsprung werden zur Analyse des Regelkreiszustands die relative Überschwingweite oder das Einschwingverhältnis, d. h. der Quotient aus Anstiegs- und Einschwingzeit der Regelgröße, als deterministische Merkmale ausgewertet.

Weitere Verfahren zur Überwachung des Betriebs von Regelkreisen sind aus der DE 102 12 909 A1 und der US 5,838,561 A bekannt.

In verfahrens- oder prozesstechnischen Anlagen, die mit Automatisierungssystemen ausgestattet sind, sind meist zahlreiche einschleifige Regelkreise, beispielsweise mit PID-Reglern, über physikalische, thermodynamische, chemische oder biologische Wechselwirkungen des jeweiligen Gesamtprozesses miteinander verknüpft. Jede Bewegung in einem Regelkreis kann sich somit bei anderen Regelkreisen als Störung auswirken. Da Wechselwirkungen der Regelkreise, die in der vorliegenden Anmeldung auch als Quereinflüsse, Kopplungen oder Interaktionen bezeichnet werden, beim Betrieb einer Anlage nicht grundsätzlich ein Problem darstellen, werden sie meist durch Anlagenfahrer nicht näher betrachtet und nicht in eine Überwachung des Betriebs der Regelkreise einbezogen. Bei deren Berücksichtigung könnte jedoch unter Umständen eine deutliche Verbesserung des Anlagenbetriebs beispielsweise bezüglich Energieeffizienz oder der Qualität der mithilfe der Anlage hergestellten Produkte erzielt werden.

Der Erfindung liegt daher die Aufgabe zugrunde, eine Diagnoseeinrichtung und ein Diagnoseverfahren zur Überwachung des Betriebs von Regelkreisen zu schaffen, welche Interaktionen jeweils eines Regelkreises auf einen anderen anzeigen und somit eine direkte Bewertung der Interaktionen der einzelnen Regelkreise untereinander erlauben.

Zur Lösung dieser Aufgabe weist die neue Diagnoseeinrichtung der eingangs genannten Art die im kennzeichnenden Teil des Anspruchs 1 angegebenen Merkmale auf. In den abhängigen Ansprüchen sind Weiterbildungen der Erfindung, in Anspruch 10 ein Diagnoseverfahren, in Anspruch 11 ein Computerprogramm zur Durchführung des Diagnoseverfahrens und in Anspruch 12 ein entsprechendes Computerprogrammprodukt beschrieben.

Die Erfindung hat den Vorteil, dass sie die Überwachung von Regelkreisen auf Interaktionen der Regelkreise untereinander und deren Bewertung durch besonders anschauliche Darstellung des Überwachungsergebnisses ermöglicht. Dadurch kann eine deutliche Verbesserung des Anlagenverhaltens erreicht werden.

Im Rahmen der Überwachung und Optimierung der Regelgüte möglichst aller Regelkreise einer Anlage ist nämlich die Kenntnis solcher Interaktionen hilfreich, um Problemursachen genauer lokalisieren zu können und um Maßnahmen zielgerichtet zu planen. Schwierigkeiten in einem Regelkreis strahlen meist aufgrund von Kopplungen in mehrere andere Regelkreise aus. Durch Bewertung von Interaktionen wird es in solchen Fällen erleichtert, denjenigen Regelkreis herauszufinden, der tatsächlich die Schwierigkeiten verursacht. Die Interaktionsanalyse kann dabei auch aufzeigen, dass einige Regelkreise einen größeren Einfluss als andere ausüben. Eine Einschätzung der einzelnen Regelkreise hinsichtlich ihrer Bedeutsamkeit in der Anlage kann daher von großem Nutzen sein. Den in diesem Sinne wichtigsten Regelkreisen einer Anlage kann nämlich für die Wartung aufgrund der Bewertung ihres Interaktionsverhaltens eine höhere Priorität zugewiesen werden, um schnellstmöglich eine Verbesserung des Anlagenverhaltens zu erzielen.

Die Erfindung hat weiterhin den Vorteil, dass zur Anwendung des Diagnoseverfahrens oder zur Verwendung der Diagnoseeinrichtung keinerlei Skalierungsfaktoren benötigt werden und zudem keinerlei Hintergrundwissen über einen auf der Anlage ablaufenden Prozess oder über die automatisierte Anlage erforderlich sind. Die Diagnose ist somit in besonders einfacher Weise durch einen Anwender durchführbar.

Zur Diagnose kann in vorteilhafter Weise eine zeitdiskrete Kreuz-Korrelationsfunktion genutzt werden, die zwischen zwei diskreten Signalen x und y mit jeweils einer Datenfolge der Länge N wie folgt definiert ist:

$$R_{xy}(\tau) = \frac{\frac{1}{N}\sum_{i=0}^{N-1-\tau} x(i+\tau) * y(i)}{\sqrt{\sigma_x^2 * \sigma_y^2}}, \quad (\tau = 0, ..., N-1).$$

Dabei stellen $\tau$ einen auf die Dauer eines Abtastintervalls bezogenen positiven Zeitversatz des Signals x gegenüber dem Signal y, $\sigma_x^2$ die Varianz des Signals x und $\sigma_y^2$ die Varianz des Signals y dar.

Zur Bewertung der Interaktion eines Regelkreises auf einen anderen wird vorteilhaft die Kreuz-Korrelationsfunktion der Regelgrößen mit positivem Zeitversatz $\tau$ der Regelgröße des jeweils anderen Regelkreises genutzt. Hat eine Anregung des einen Regelkreises durch eine Änderung einer Sollwertvorgabe, beispielsweise mit rampenförmigem Verlauf oder vorzugsweise mit einem Verlauf entsprechend einer Sprungfunktion, einen Einfluss auf die Regelgröße des jeweils anderen Regelkreises, wird sich ein großer Wert in der Kreuz-Korrelationsfunktion finden lassen. Je stärker die Kopplung ist, desto größer werden die Funktionswerte der Kreuz-Korrelationsfunktion. Ist dagegen kein Einfluss vorhanden, wird die Kreuz-Korrelationsfunktion nur relativ kleine Werte annehmen. Besonders aussagekräftig für die Bewertung der Interaktion ist dabei eine erste Maßzahl, für welche der betragsmäßig größte Wert der Kreuz-Korrelationsfunktion bei einem positiven Zeitversatz $\tau$ gesucht wird. Der Grund für den positiven Zeitversatz liegt in der Kausalität: Es ist nicht möglich eine Reaktion beispielsweise auf einen Sollwertwertsprung zu erhalten, wenn dieser noch nicht stattgefunden hat. Daher wird bei einem Sollwertsprung an einem Regelkreis die Kreuz-Korrelationsfunktion zwischen dem Verlauf dessen Regelgröße, d. h. der Folge von dessen Istwert-Daten, und dem zur selben Zeit am jeweils anderen Regelkreis gemessenen Verlauf der Regelgröße, d. h. der Folge von Istwert-Daten des jeweils anderen Regelkreises, für positiven Zeitversatz $\tau$ gebildet.

Zur Anregung des einen Regelkreises durch Änderung seiner Sollwert-Vorgabe sind prinzipiell eine Vielzahl von Verläufen geeignet, z. B. rampenförmiger Verlauf, Sollwertsprung oder ein Rechteckimpuls vorgegebener Höhe und Breite. Als besonders vorteilhaft bezüglich Aussagekraft und Zuverlässigkeit des Diagnoseergebnisses hat sich jedoch eine Anregung durch einen Sollwertsprung vorgegebener Höhe gezeigt.

Gemäß einer besonders vorteilhaften Weiterbildung der Erfindung sind in dem Datenspeicher zusätzlich Folgen von Stellwertdaten zu überwachender Regelkreise abspeicherbar und analog zur Bestimmung der ersten Maßzahl, d. h. gemäß derselben Berechnungsvorschrift jedoch mit anderen Signalen, wird eine zweite Maßzahl anhand von Stellwertdaten bestimmt und der arithmetische Mittelwert der beiden Maßzahlen berechnet. Ist nämlich der Regler eines Regelkreises vergleichsweise schnell eingestellt, wird er den Quereinfluss eines anderen Regelkreises sofort ausregeln, was dazu führen kann, dass im Verlauf der Regelgröße keine Interaktion zu erkennen ist. Aufgrund des aktiven Eingriffs des schnellen Reglers, d. h. eines Reglers mit schneller Reaktion auf eine mögliche Regeldifferenz, wird der Quereinfluss in der durch ihn erzeugten Stellgröße aber deutlich sichtbar. Es ist daher vorteilhaft, die Stellgrößen des Paares zu überwachender Regelkreise ebenfalls miteinander zu korrelieren, um die Aussagekraft des Diagnoseergebnisses weiter zu verbessern. Als Kenngröße zur Bewertung der Interaktion kann vorteilhaft der Mittelwert des Betrags der beiden Kreuz-Korrelationsfunktionen von Regel- und Stellgrößen bestimmt und angezeigt werden.

Da durch Rauscheffekte und andere Störungen immer eine geringe, zufällige Ähnlichkeit der Signale zu erwarten ist, kann mit Vorteil ein Grenzwert definiert werden um festzulegen, ab wann es sich um eine echte Kopplung, welche als Interaktion möglicherweise Störungen verursachen kann, und bis wann es sich vermutlich nur um Rauschen oder andere Störungen handelt. Als Vorbelegung kann dieser Wert beispielsweise auf 0,6 gesetzt werden, da in Fällen einer starken Kopplung zwischen zwei Regelkreisen die Kreuz-Korrelationsfunktionen deutlich größere Werte annehmen wird. Aufgrund der Definition der Kreuz-Korrelationsfunktion kann diese den Wert 1 selbstverständlich nicht überschreiten.

Ergänzend zur Anzeige der Stärke der Kopplung mittels der Kennzahl kann zudem die Richtung der Kopplung mit ihrem Wirksinn anhand der Kreuz-Korrelationsfunktion bestimmt und angezeigt werden. Damit wird vorteilhaft eine Aussage möglich, ob eine positive Sollwert-Änderung an dem einen Regelkreis eine positive oder eine negative Änderung der Regelgröße am jeweils anderen Regelkreis des Paares zu überwachender Regelkreise auslöst.

Das Ergebnis der Diagnose kann, falls ein Automatisierungssystem eine Vielzahl von Regelkreisen besitzt, für einen schnellen Überblick über die Stärke der jeweiligen Interaktionen der zu überwachenden Regelkreise besonders übersichtlich dargestellt werden, wenn die Regelkreise durchnummeriert und Kennzahlen $KKF_{i,j}$, $i \neq j$, zur Bewertung der Interaktion des i-ten Regelkreises der zu überwachenden Regelkreise auf den j-ten Regelkreis in einer Matrix mit Zeilenindex i und Spaltenindex j eingetragen werden.

Diese Übersicht mittels einer Matrix kann in besonders einfacher Weise um eine Anzeige der Wirkrichtung der Interaktionen durch ein entsprechendes Vorzeichen der Kennzahlen erweitert werden.

In einer weiteren vorteilhaften Ausgestaltung werden anhand der Matrix Zeilensummen der Beträge der Kennzahlen berechnet. Anhand dieser Zeilensummen ist in einfacher Weise eine sortierte Liste aller Regelkreise entsprechend dem jeweiligen Einfluss, den diese auf die anderen Regelkreise ausüben, erhältlich. Regelkreise, die in diesem Sinne eine besonders große Bedeutung haben, können im Rahmen einer sich an die Diagnose anschließenden Optimierung des Automatisierungssystems zur Behebung eventuell erkannter Schwierigkeiten mit besonderer Priorität behandelt werden.

Die Diagnoseeinrichtung kann auf dieselbe Weise wie die bereits aus der EP 1 528 447 B1 bekannte Diagnoseeinrichtung vorteilhaft als Software-Funktionsbaustein ausgebildet werden, der in einer graphischen Bedienoberfläche eines Engineering-Systems mit Funktionsbausteinen des Regelkreises verschaltbar und zum Betrieb der Diagnoseeinrichtung in ein Automatisierungsgerät ladbar ist. Auf einem sogenannten Faceplate zur Realisierung einer Mensch-Maschine-Schnittstelle auf einem Bedien- und Beobachtungsgerät der automatisierungstechnischen Anlage werden dann die berechneten Kennzahlen oder die Kennzahlenmatrix zur Anzeige gebracht. Auf diesem Bedien- und Beobachtungssystem können durch einen Bediener, falls gewünscht, eine Änderung der Parametrierung, beispielsweise eine Anpassung des Grenzwerts für die Anzeige einer Warnmeldung bei erhöhtem Wert der Kennzahl usw., vorgenommen werden.

In besonders vorteilhafter Weise kann die neue Diagnoseeinrichtung zur Überwachung des Betriebs eines Regelkreises in einer Software-Umgebung zur Cloud-basierten Regelkreisüberwachung implementiert werden. Eine derartige Software-Umgebung stellt beispielsweise der datenbasierte Remote Service "Control Performance Analytics" der Siemens AG dar. Daten aus Kundenanlagen werden mithilfe von Software-Agenten gesammelt, aggregiert und an ein Siemens Service Operation Center geschickt, in welchem sie auf einem Remote Service-Rechner abgespeichert werden. Dort werden sie mithilfe von verschiedenen "Data Analytics" Software-Applikationen halbautomatisch ausgewertet. Bei Bedarf können für den Remote Service besonders geschulte Experten auf dieser Datenbasis hocheffizient arbeiten. Die Ergebnisse der Datenanalyse können auf einem Monitor des Remote Service-Rechners angezeigt und/oder auf einem Sharepoint bereitgestellt werden, sodass sie vom Endkunden, d. h. dem Bediener der automatisierungstechnischen Anlage, z. B. in einem Browser betrachtet werden können.

Das Diagnoseverfahren wird somit bevorzugt in Software oder in einer Kombination Soft-/Hardware implementiert, sodass die Erfindung auch ein Computerprogramm mit durch einen Computer ausführbaren Programmcodeanweisungen zur Implementierung des Diagnoseverfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann, wie oben beschrieben, in einem Speicher eines Automatisierungsgeräts vorgehalten oder in diesen geladen werden, sodass beim Betrieb des Automatisierungsgeräts die Überwachung des Betriebs von Regelkreisen automatisch durchgeführt wird, oder das Computerprogramm kann bei einer Cloud-basierten Überwachung von Regelkreisen in einem Speicher eines Remote Service-Rechners vorgehalten oder in diesen ladbar sein.

Anhand der Zeichnungen, in denen Ausführungsbeispiele der Erfindung dargestellt sind, werden im Folgenden die Erfindung sowie Ausgestaltungen und Vorteile näher erläutert.

Es zeigen:

Figur 1     ein Blockschaltbild mit drei Regelkreisen und einer Diagnoseeinrichtung,

Figur 2     zur Diagnose verwendete Zeitverläufe von Sollwerten und Istwerten und

Figur 3     dazu korrespondierende Zweitverläufe von Stellwerten.

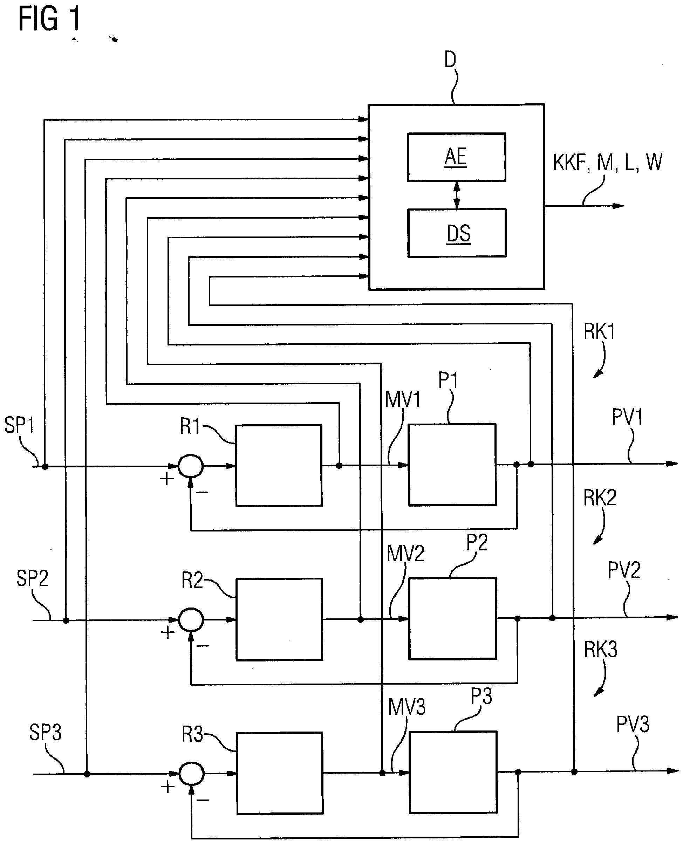

Figur 1 zeigt ein Beispiel mit drei zu überwachenden Regelkreisen RK1, RK2 und RK3, die in einem nicht weiter dargestellten Automatisierungssystem eingesetzt werden. Die Regelkreise RK1 und RK2 dienen in einer realen Anlage zur Regelung jeweils eines Durchflusses als Regelgröße PV1 bzw. PV2, der Regelkreis RK3 zur Regelung eines Füllstands in einem Tank als Regelgröße PV3. Als Stellglieder P1, P2 und P3 werden jeweils Regelventile verwendet. Der Regelkreis RK1 regelt dabei einen Hauptzufluss zum Tank, dessen Füllstand durch den Regelkreis RK3 geregelt wird. Der Regelkreis RK2 befindet sich in einem zum Hauptzufluss parallelen Nebenzuflusszweig mit geringerer Durchflussmenge und regelt somit den Durchfluss in einem zweiten Weg, auf welchem ein Medium, beispielsweise Wasser, in den Tank zufließen kann. Zur Regelung des Füllstands verwendet der Regelkreis RK3 ein Abflussventil, durch welches Medium aus dem Tank abgelassen wird. In den einzelnen Regelkreisen RK1, RK2 und RK3 sind weiterhin Sollwerte mit den Bezugszeichen SP1, SP2 bzw. SP3, Regler mit den Bezugszeichen R1, R2 bzw. R3 und Stellgrößen mit den Bezugszeichen MV1, MV2 bzw. MV3 gekennzeichnet. Die Sollwerte SP1, SP2 und SP3, die Stellgrößen MV1, MV2 und MV3 sowie die Regelgrößen PV1, PV2 und PV3 werden auf eine Diagnoseeinrichtung D geleitet und dort jeweils als Folgen von Sollwertdaten, Stellwertdaten bzw. Istwertdaten in einen Datenspeicher DS hinterlegt. Anhand dieser Folgen berechnet eine Auswerteeinrichtung AE Kenngrößen KKF, eine Matrix M und/oder eine Liste L (Figur 1), welche zur Bewertung einer Interaktion der Regelkreise RK1, RK2 und RK3 untereinander einem Bediener angezeigt werden. Dadurch wird eine genaue Aussage über die Stärke und den Wirksinn der Interaktionen ermöglicht, sodass dem Anwender mögliche Ursachen für Schwierigkeiten aufgrund von Quereinflüssen der Regelkreise RK1, RK2 und RK3 des Automatisierungssystems leichter ersichtlich werden. Zudem wird, wenn durch eine Kenngröße KKF beispielsweise ein Grenzwert von 0,6 überschritten wird, ein Warnsignal W ausgegeben. Im Einzelfall können unerwünscht starke Querdynamiken zwischen Teilsystemen, die auf diesem Weg entdeckt worden sind, durch eine Verbesserung der Regelungsstruktur, beispielsweise durch den Einsatz eines Mehrgrößenreglers, gezielt reduziert werden. Durch das Vermindern der Quereinflüsse im Gesamtprozess können unter Umständen die Produktivität gesteigert und die Kosten gesenkt werden.

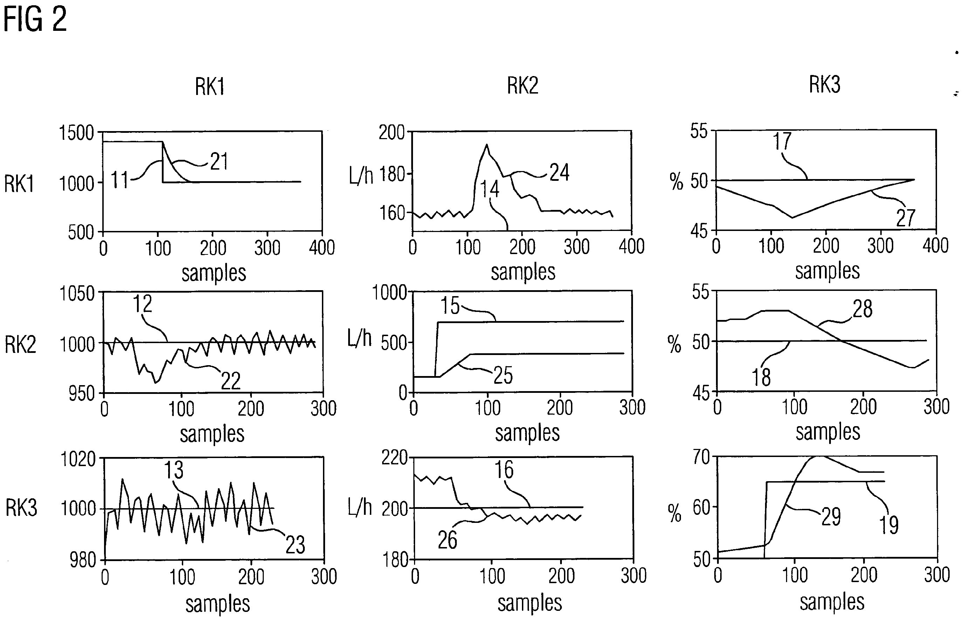

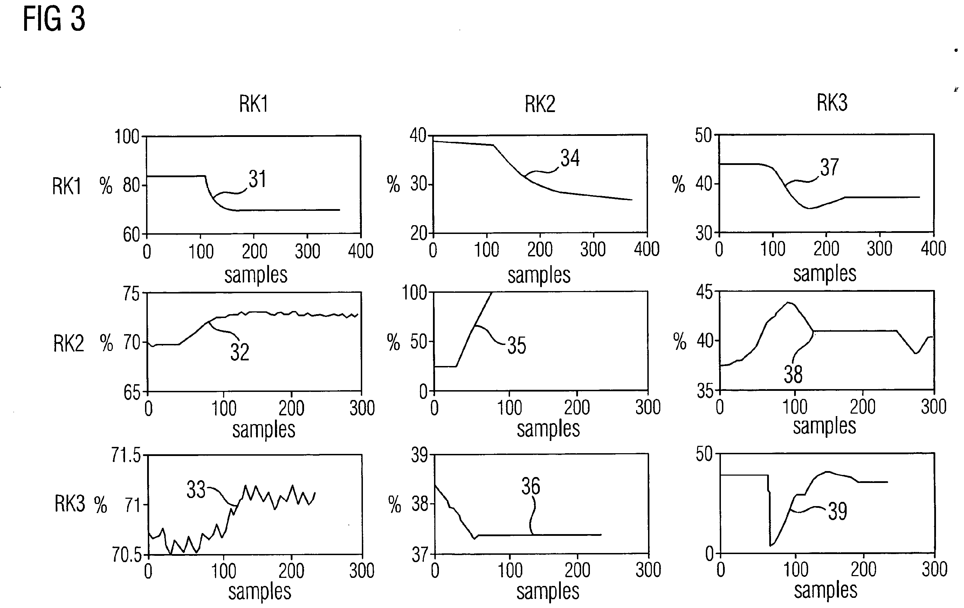

Figur 2 zeigt verschiedene Verläufe der Sollwerte SP1, SP2 und SP3 sowie der Regelgrößen PV1, PV2 und PV3, Figur 2 zeigt Verläufe der Stellgrößen MV1, MV2 und MV3 in Diagrammen. In der jeweiligen Anordnung von Diagrammen zeigt die Zeilenbeschriftung an, in welchem Regelkreis RK1, RK2 oder RK3 ein Sollwertsprung als Anregung des jeweiligen Regelkreises RK1, RK2 bzw. RK3 vollzogen wurde. Durch die Spaltenbeschriftung wird jeweils angezeigt, aus welchem Regelkreis RK1, RK2 oder RK3 die im jeweiligen Diagramm dargestellten Daten stammen. An den Abszissen sind die jeweiligen Nummern der Abtastungen, engl. samples, d.h. die Nummer eines Datensatzes in der jeweiligen Folge von Daten, aufgetragen. An den Ordinaten der Diagramme in den Spalten des Regelkreises RK1 und des Regelkreises RK2 ist die jeweilige Durchflussmenge L/h (Liter/ Stunde) aufgetragen, an den Ordinaten der Diagramme, welche dem Regelkreis RK3 zugeordnet sind, die Füllhöhe des Tanks als Angabe in % (Prozent). Die Verläufe 11, 12 und 13 sind Sollwertverläufe, die am Regelkreis RK1 aufgenommen wurden, die Verläufe 14, 15 und 16 Sollwertverläufe des Regelkreises RK2 und die Verläufe 17, 18 und 19 Sollwertverläufe des Regelkreises RK3. Es ist darauf hinzuweisen, dass der Verlauf 14 auf der Abszisse des betreffenden Diagramms liegt, da der Sollwert PV2 konstant 150 L/h beträgt. Die Verläufe 21, 22 und 23 sind Istwertverläufe des Regelkreises RK1, die Verläufe 24, 25 und 26 Istwertverläufe des Regelkreises RK2 und die Verläufe 27, 28 und 29 Istwertverläufe des Regelkreises RK3. Die in Figur 3 gezeigten Verläufe 31, 32 und 33 sind Stellgrößenverläufe des Regelkreises RK1, die Verläufe 34, 35 und 36 Stellgrößenverläufe des Regelkreises RK2 und die Verläufe 37, 38 und 39 Stellgrößenverläufe des Regelkreises RK3.

Beispielsweise zur Bewertung einer Interaktion des einen Regelkreises RK1 auf den anderen Regelkreis RK2 wird bei vorgegebener Anregung durch einen Sollwertsprung gemäß dem Verlauf 11 anhand der Verläufe 21 und 24 der Regelgrößen PV1 bzw. PV2 die Kreuz-Korrelationsfunktion für alle möglichen, positiven Zeitverschiebungen $\tau$ des Verlaufs 24 gegenüber dem Verlauf 21 berechnet und das Betragsmaximum dieser Kreuz-Korrelationsfunktion als eine erste Maßzahl ermittelt. Zudem wird anhand der Verläufe 31 und 34 in Figur 3 nach gleicher Berechnungsmethode eine zweite Maßzahl bestimmt. Durch Berechnen des arithmetischen Mittelwerts der beiden Maßzahlen wird eine Kenngröße $KKF_{1,2}$ erhalten, welche eine Bewertung der Interaktion des Regelkreises RK1 auf den Regelkreis RK2 ermöglicht. Um eine Übersicht über alle Interaktionen der Regelkreise zu erhalten, wird auf entsprechende Weise für jedes mögliche Paar von Regelkreisen RK1, RK2 und RK3 und für jede Einflussrichtung innerhalb des jeweiligen Paares eine Kenngröße zur Bewertung der Interaktion berechnet.

Allgemein ausgedrückt kann nun für ein Automatisierungssystem mit n zu überwachenden Regelkreisen als Ergebnis der Berechnungen eine Matrix erstellt werden, deren Feldelemente auf der Hauptdiagonalen immer der Wert 1 der Autokorrelationsfunktion AKF und ansonsten die Werte der verschiedenen Kreuz-Korrelationsfunktionen $KKF_{i,j}$ mit i - Zeilenindex und j - Spaltenindex sind. Wird eine Darstellung in Prozent gewünscht, kann die Matrix mit dem Faktor 100 multipliziert werden, um eine Matrix Interaction in der folgenden Form zu erhalten:

$$Interaction = \begin{bmatrix} AKF_{1,1} & KKF_{1,2} & \cdots & KKF_{1,n} \\ KKF_{2,1} & AKF_{2,2} & \cdots & KKF_{2,n} \\ \vdots & \vdots & \ddots & \vdots \\ KKF_{n,1} & KKF_{n,2} & \cdots & AKF_{n,n} \end{bmatrix} * 100$$

Durch die vorteilhafte Verwendung der Kreuz-Korrelationsfunktionen ist es zudem möglich, eine Kopplung zweier Regelkreise mit negativem Wirksinn zu erkennen. Es kann daher auf Basis der Kreuz-Korrelationsfunktion nicht nur die Stärke der Kopplung sondern gleichzeitig auch deren Wirksinn, der dem Vorzeichen der Verstärkung der Übertragungsfunktion einer Kopplung entspricht, angegeben werden. Das bedeutet, dass eine Aussage getroffen werden kann, ob eine positive Sollwertänderung an dem einen Regelkreis eines Paares zu überwachender Regelkreise, beispielsweise an dem Regelkreis RK1, eine positive oder negative Änderung der Regelgröße an dem jeweils anderen Regelkreis des Paares zu überwachender Regelkreise, beispielsweise dem Regelkreis RK2, auslöst. Um nun angeben zu können, ob eine gleichsinnige oder eine gegensinnige Wirrichtung vorliegt, müssen die Vorzeichen der berechneten Werte der Kreuz-Korrelationsfunktionen untersucht werden. Dies wird im Folgenden am Beispiel des Paares mit den Regelkreisen RK1 und RK2 näher erläutert, wobei der Regelkreis RK1 durch einen Sollwertsprung angeregt und als Hauptregelkreis bezeichnet wird. Die Bestimmung des jeweiligen Wirksinns für die Kopplungen der übrigen Paare zu überwachender Regelkreise erfolgt in entsprechender Weise.

Zunächst kann eine Aussage über den Wirksinn, also das Vorzeichen der Übertragungsfunktion der Strecke P1 des Hauptregelkreises RK1 getroffen werden. Die Autokorrelationsfunktionen der Stellgröße MV1 und der Regelgröße PV1 sind in jedem Fall positiv und können daher keinen Anhaltspunkt für die Bestimmung des Wirksinns geben. Aussagekräftiger ist dagegen die Kreuz-Korrelationsfunktion zwischen Stellgröße MV1 und Regelgröße PV1 der jeweiligen Messungen bei Anregung des Regelkreises RK1 durch einen Sollwertsprung. Die Auswertung des Betragsmaximums dieser Kreuz-Korrelationsfunktion kann zur Bestimmung des Vorzeichens der Verstärkung der betrachteten Übertragungsfunktion der Strecke P1 benutzt werden. Ergibt sich das Betragsmaximum aus einem negativen Minimum der Kreuz-Korrelationsfunktion, ist die Verstärkung negativ. Entsprechend kann bei einem positiven Maximum mit größtem Betragswert der Kreuz-Korrelationsfunktion auf eine positive Verstärkung geschlossen werden.

Beim Bestimmen des jeweiligen Wirksinns der Interaktionen der Regelkreise RK1, RK2 und RK3 untereinander ist zunächst eine Betrachtung der Einflüsse von Sollwertsprüngen an den verschiedenen Regelkreisen RK1, RK2 oder RK3 nötig. Führt beispielsweise ein negativer Sollwertsprung am Regelkreis RK1 zu einer Störung der Regelgröße PV2 des Regelkreises RK2, so äußert sich diese in einem zunächst starken Anstieg des Verlaufs 24 der Regelgröße und wird anschließend vom Regler R2 wieder ausgeregelt. Somit liegt ein negativer Wirksinn der Interaktion vor. Ein positiver Einfluss würde dagegen bedeuten, dass sich bei einem positiven Sollwertsprung eine positive Störung in der anderen Regelgröße ergibt. Diese hätte aber aufgrund des sprunghaften Anwachsens der Störung und der langsamen Ausregelung eine negative Ähnlichkeit mit dem tatsächlichen Sollwertsprung, da die Regelgröße des gestörten Regelkreises ähnlich dem Sollwertsprung in einem engeren Zeitraum ansteigen als abfallen würde. Ein solches Verhalten wird beispielsweise an den Verläufen 22 und 25 in Figur 2 deutlich, welche charakteristisch für die negative Interaktion zwischen dem Regelkreis RK2 und RK1 bei einem Sollwertsprung entsprechend dem Verlauf 15 am Regelkreis RK2 sind. Bei einer gleichsinnigen Wirkrichtung wie am Beispiel der Verläufe 21 und 27 in Figur 2 gilt dies entsprechend umgekehrt. Das heißt, ein negativer Sollwertsprung entsprechend dem Verlauf 11 führt zu einer negativen Störung entsprechend dem Verlauf 27, welche aber mehr Zeit benötigt um ausgeregelt zu werden als um anzusteigen, was zu einem negativen Vorzeichen der Kreuz-Korrelationsfunktion bei ihrem Betragsmaximum führt.

Diesen Erkenntnissen entsprechend werden die Polaritäten der für die Bestimmung der ersten Maßzahlen berechneten Kreuz-Korrelationsfunktionen jeweils bei ihrem Betragsmaximum ermittelt und bei negativer Polarität durch ein positives Vorzeichen bei der jeweiligen Kenngröße eine gleichsinnige Wirkrichtung des einen Regelkreises auf den jeweils anderen Regelkreis und bei positiver Polarität durch ein negatives Vorzeichen bei der jeweiligen Kenngröße eine gegensinnige Wirkrichtung des einen Regelkreises auf den anderen Regelkreis angezeigt.

In einer übersichtlichen Tabellendarstellung können dem Anwender somit gleichzeitig die Stärken der Interaktionen von Regelkreisen und der jeweilige Wirksinn angezeigt werden. Der Mittelwert der Beträge der Kreuz-Korrelationsfunktionen der Regel- und Stellgrößen wird dazu mit dem auf obige Weise festgelegten Vorzeichen versehen und man erhält für das anhand der Figuren 1 bis 3 beschriebene Beispiel mit drei Regelkreisen RK1, RK2 und RK3 die folgende Tabelle als Ergebnis der Interaktionsanalyse, in welcher die einzelnen Kenngrößen KKF in Matrixdarstellung enthalten sind:

| \auf Einfluss von | RK1 | RK2 | RK3 |
|---|---|---|---|
| RK1 | 100 % | -54,2 % | 68,6 % |
| RK2 | -73,8 % | 100 % | 26,2 % |
| RK3 | 0% | 0% | -100 % |

In der Tabelle, wie auch bei Betrachtung der in den Figuren 2 und 3 dargestellten Diagramme, ist die Kopplung der beiden Durchflussregelkreise RK1 und RK2 in den Ergebnissen wie in den Messungen deutlich zu erkennen. Die Kopplung der Durchflussregelkreise RK1 und RK2 mit dem aus anderen Gründen dauerhaft schwankenden Füllstand, der Regelgröße PV3 des Regelkreises RK3, ist nur leicht zu erahnen. Beispielsweise kann in den Messungen bei einer Anregung des Regelkreises RK1 durch einen Sprung gemäß den ersten Zeilen der Figuren 2 und 3 kurz nach dieser Anregung ein kleiner Knick im Verlauf 27 des Füllstands festgestellt werden. Im Verlauf 26 der Regelgröße PV2 des Regelkreises RK2 ist bei Anregung des Regelkreises RK3 durch einen Sollwertsprung kurz vor dessen Auftritt eine Störung zu sehen. Dadurch, dass nur positive Zeitverschiebungen bei der Analyse der Interaktionen mittels der Kreuz-Korrelationsfunktion betrachtet werden, fällt diese Störung in vorteilhafter Weise jedoch nicht ins Gewicht.

Wie an den in obige Tabelle eingetragenen Werten der Kenngrößen KKF deutlich wird, können bei der Diagnose Interaktionen zwischen den Regelkreisen RK1, RK2 und RK3 zuverlässig erkannt werden. Die beiden Durchflussregelkreise RK1 und RK2 beeinflussen sich jeweils gegenseitig und haben beide einen Einfluss auf den Füllstandsregelkreis RK3. Da der Füllstandsregelkreis RK3 am Ende der Wirkungskette steht, hat er selbst keinen aktiven Einfluss auf die beiden anderen Regelkreise RK1 und RK2. Auch der jeweilige Wirksinn der Interaktionen zwischen den Regelkreisen RK1, RK2 und RK3 wird in vorteilhafter Weise korrekt angezeigt. Ein steigender Durchfluss im Regelkreis RK1 oder Regelkreis RK2 ist mit einer Interaktion auf den jeweils anderen Durchflussregelkreis RK2 bzw. RK1 mit negativem Wirksinn verbunden, während der Füllstand des Regelkreises RK3 entsprechend einem positiven Wirksinn ansteigen wird. Da der Regelkreis RK3 den Füllstand des Tanks über dessen Abfluss regelt, weist er eine negative Verstärkung in der Übertragungsfunktion der Strecke P3 auf.

Um nun eine Bewertung des Gesamteinflusses jedes Regelkreises RK1, RK2 und RK3 auf die jeweils anderen Regelkreise in der Anlage zu erhalten, wird für jede Zeile der Ergebnismatrix eine normierte Summe der eingetragenen Beträge berechnet. Der dabei erhaltene größte Wert kennzeichnet den einflussreichsten Regelkreis in einer geordneten Liste L (Figur 1), die durch die Diagnoseeinrichtung D ausgegeben wird. In dem anhand der Figuren 1 bis 3 und obiger Tabelle erläuterten Beispiel wird durch die Diagnose erkannt, dass der Regelkreis RK1 den größten Einfluss auf die Anlage hat. Der Regelkreis RK2 folgt an zweiter Stelle, während der Regelkreis RK3 die beiden anderen Regelkreise RK1 und RK2 nicht beeinflusst und somit für eventuell sich anschließende Optimierungsmaßnahmen niedrigste Priorität besitzt.

Im Folgenden werden noch einmal kurz die durch die Erfindung erzielten Vorteile zusammengefasst: Aufgrund der Berechnung der diskreten Kreuz-Korrelationsfunktion sind keinerlei Vorkenntnisse über die automatisierungstechnische Anlage und das Automatisierungssystem, für dessen Regelkreise eine Interaktionsanalyse durchgeführt wird, erforderlich. Beispielsweise werden keinerlei Normierungsfaktoren benötigt und es müssen keine Skalierungen vorgenommen werden. Das Diagnoseverfahren benötigt nur die Messungen an den einzelnen Regelkreisen, um eine Analyse der Interaktionen durchzuführen. Zudem kommt das Verfahren aufgrund der Verwendung einfacher statistischer Methoden mit geringem Rechenaufwand aus und weist eine hohe Zuverlässigkeit der Diagnoseaussagen auf.

Durch die Berechnung der Kreuz-Korrelationsfunktionen sowohl für Regelgrößen als auch für Stellgrößen und die anschließende Mittelwertbildung können auch Interaktionen erkannt werden, die bei alleiniger Betrachtung der Regelgrößen wegen hoher Regelgüte betroffener Regelkreise verdeckt würden.

Das Verfahren erlaubt zuverlässige Diagnoseaussagen über die Stärke und den Wirksinn der Kopplungen zwischen Regelkreisen, die übersichtlich in einer Matrix von Prozentwerten und Vorzeichen dargestellt werden. Im Einzelfall können unerwünscht starke Querdynamiken zwischen Regelkreisen, die auf diesem Weg entdeckt worden sind, durch eine Verbesserung der Regelungsstruktur, beispielsweise durch den Einsatz eines Mehrgrößenreglers, gezielt reduziert werden. Durch das Vermindern der Quereinflüsse in der automatisierungstechnischen Anlage können die Produktivität gesteigert und die Kosten gesenkt werden. Das Diagnoseverfahren liefert zudem eine sortierte Liste aller Regelkreise entsprechend ihrem Einfluss, den diese auf die anderen Regelkreise ausüben. Regelkreise, die in diesem Sinne eine besonders große Bedeutung haben, können im Rahmen der Überwachung und Optimierung der Regelgüte mit besonderer Priorität behandelt werden.

**Patentansprüche**

1. Diagnoseeinrichtung zur Überwachung des Betriebs von Regelkreisen (RK1, RK2, RK3) eines Automatisierungssystems, wobei die Diagnoseeinrichtung (D) dazu ausgebildet ist, in einem Datenspeicher (DS) Folgen von Istwertdaten zu überwachender Regelkreise (RK1, RK2, RK3) abzuspeichern, **gekennzeichnet durch** eine Auswerteeinrichtung (AE), die dazu ausgebildet ist, bei vorgegebener oder vorgebbarer Anregung durch eine Änderung einer Sollwertvorgabe des einen Regelkreises (RK1) eines Paares zu überwachender Regelkreise (RK1, RK2) anhand zumindest jeweils eines Ausschnitts der Folgen von Istwertdaten des Paares der zu überwachenden Regelkreise als eine erste Maßzahl das Betragsmaximum der Kreuz-Korrelationsfunktion für positiven Zeitversatz der Folge von Istwertdaten des jeweils anderen Regelkreises (RK2) des Paares zu überwachender Regelkreise zu bestimmen und in Abhängigkeit der ersten Maßzahl eine Kenngröße (KKF) zur Bewertung einer Interaktion des einen Regelkreises (RK1) auf den anderen Regelkreis (RK2) zu bestimmen und anzuzeigen.

2. Diagnoseeinrichtung nach Anspruch 1, **dadurch gekennzeichnet, dass** die vorgegebene oder vorgebbare Anregung ein Sollwertsprung vorgegebener oder vorgebbarer Höhe ist.

3. Diagnoseeinrichtung nach Anspruch 1 oder 2, **dadurch gekennzeichnet, dass** in dem Datenspeicher (DS) Folgen von Stellwertdaten zu überwachender Regelkreise (RK1, RK2, RK3) abspeicherbar sind, dass analog zur Bestimmung der ersten Maßzahl eine zweite Maßzahl anhand von Stellwertdaten bestimmbar ist und dass die Kennzahl (KKF) der arithmetische Mittelwert der ersten Maßzahl und der zweiten Maßzahl ist.

4. Diagnoseeinrichtung nach einem der vorhergehenden Ansprüche, **dadurch gekennzeichnet, dass** ein Warnsignal (W) ausgebbar ist, wenn die Kennzahl (KKF) einen vorgegebenen oder vorgebbaren Grenzwert übersteigt.

5. Diagnoseeinrichtung nach einem der vorhergehenden Ansprüche, **dadurch gekennzeichnet, dass** die Polarität der für die Bestimmung der ersten Maßzahl berechneten Kreuz-Korrelationsfunktion bei ihrem Betragsmaximum ermittelt wird und dass bei negativer Polarität eine gleichsinnige Wirkrichtung des einen Regelkreises (RK1) auf den anderen Regelkreis (RK2) und bei positiver Polarität eine gegensinnige Wirkrichtung des einen Regelkreises (RK1) auf den anderen Regelkreis (RK2) angezeigt wird.

6. Diagnoseeinrichtung nach einem der vorhergehenden Ansprüche, **dadurch gekennzeichnet, dass** eine Matrix (M) anzeigbar ist, in welcher Kennzahlen ($KKF_{i,j}$, $i \neq j$) zur Bewertung der Interaktion des i-ten Regelkreises der zu überwachenden Regelkreise auf den j-ten Regelkreis der zu überwachenden Regelkreise eingetragen sind.

7. Diagnoseeinrichtung nach Anspruch 6, **dadurch gekennzeichnet, dass** in der Matrix (M) eine gleichsinnige oder eine gegensinnige Wirkrichtung anzeigbar ist.

8. Diagnoseeinrichtung nach Anspruch 6 oder 7, **dadurch gekennzeichnet, dass** anhand der Matrix (M) Zeilensummen der Beträge der Kennzahlen bestimm- und anzeigbar sind.

9. Diagnoseeinrichtung nach einem der vorhergehenden Ansprüche, **dadurch gekennzeichnet, dass** zumindest der Datenspeicher (DS) und die Auswerteeinrichtung (AE) durch Software auf einem Remote Service-Rechner zur Ferndiagnose des Regelkreises implementiert sind.

10. Diagnoseverfahren zur Überwachung des Betriebs von Regelkreisen (RK1, RK2, RK3) eines Automatisierungssystems **gekennzeichnet durch** die folgenden Schritte:

   - Abspeichern jeweils einer Folge von Istwertdaten zweier Regelkreise (RK1, RK2) eines Paares zu überwachender Regelkreise (RK1, RK2, RK3),
   - bei vorgegebener oder vorgebbarer Anregung durch eine Änderung einer Sollwertvorgabe des einen Regelkreises (RK1) des Paares zu überwachender Regelkreise anhand zumindest jeweils eines Ausschnitts der Folgen von Istwertdaten Bestimmen des Betragsmaximums der Kreuz-Korrelationsfunktion für positiven Zeitversatz der Folgen von Istwertdaten des jeweils anderen Regelkreises (RK2) des Paares zu überwachender Regenkreise als eine erste Maßzahl und
   - in Abhängigkeit der ersten Maßzahl Bestimmen und Anzeigen einer Kenngröße (KKF) zur Bewertung einer Interaktion des einen Regelkreises (RK1) auf den anderen Regelkreis (RK2).

11. Computerprogramm mit durch einen Computer ausführbaren Programmcodeanweisungen zur Implementierung des Verfahrens nach Anspruch 10, wenn das Computerprogramm auf einem Computer ausgeführt wird.

12. Computerprogrammprodukt, insbesondere Datenträger oder Speichermedium mit einem durch einen Computer ausführbaren Computerprogramm gemäß Anspruch 11.

**Claims**

1. Diagnostic device for monitoring the operation of control loops (RK1, RK2, RK3) of an automation system, wherein the diagnostic device (D) is embodied to store sequences of actual-value data of control loops (RK1, RK2, RK3) that are to be monitored in a data memory (DS), **characterised by** an evaluation device (AE), which is embodied, given predefined or predefinable excitation as a result of a change in a setpoint setting of one control loop (RK1) of a pair of control loops (RK1, RK2) that are to be monitored, to determine the absolute value maximum of the cross-correlation function as a first quantitative measure on the basis of at least one section in each case of the sequences of actual-value data of the pair of control loops that are to be monitored for positive time lag of the sequence of actual-value data of the respective other control loop (RK2) of the pair of control loops that are to be monitored, and to determine and display a parameter (KKF) for evaluating an interaction effect of one control loop (RK1) on the other control loop (RK2) as a function of the first quantitative measure.

2. Diagnostic device according to claim 1, **characterised in that** the predefined or predefinable excitation is a setpoint step change of predefined or predefinable height.

3. Diagnostic device according to claim 1 or 2, **characterised in that** sequences of actuating value data of control loops (RK1, RK2, RK3) that are to be monitored can be stored in the data memory (DS), **in that** a second quantitative measure can be determined analogously to the determination of the first quantitative measure on the basis of actuating value data, and **in that** the numeric parameter (KKF) is the arithmetic mean of the first quantitative measure and the second quantitative measure.

4. Diagnostic device according to one of the preceding claims, **characterised in that** a warning signal (W) can be output if the numeric parameter (KKF) exceeds a predefined or predefinable limit value.

5. Diagnostic device according to one of the preceding claims, **characterised in that** the polarity of the cross-correlation function calculated for the purpose of determining the first quantitative measure is determined at its absolute value maximum, and **in that** in the event of negative polarity an effect of one control loop (RK1) on the other control loop (RK2) in the same direction is indicated and in the event of positive polarity an effect of one control loop (RK1) on the other control loop (RK2) in the opposite direction is indicated.

6. Diagnostic device according to one of the preceding claims, **characterised in that** a matrix (M) can be displayed in which are entered numeric parameters ($KKF_{i,j}$, where $i \neq j$) for evaluating the interaction effect of the i-th control loop of the control loops that are to be monitored on the j-th control loop of the control loops that are to be monitored.

7. Diagnostic device according to claim 6, **characterised in that** an effect in the same or in the opposite direction can be displayed in the matrix (M).

8. Diagnostic device according to claim 6 or 7, **characterised in that** row sums of the absolute amounts of the numeric parameters can be determined and displayed with the aid of the matrix (M).

9. Diagnostic device according to one of the preceding claims, **characterised in that** at least the data memory (DS) and the evaluation device (AE) are implemented by means of software on a remote service computer for the purpose of remote diagnosis of the control loop.

10. Diagnostic method for monitoring the operation of control loops (RK1, RK2, RK3) of an automation system, **characterised by** the following steps:

    - storing in each case a sequence of actual-value data of two control loops (RK1, RK2) of a pair of control loops (RK1, RK2, RK3) that are to be monitored,
    - given predefined or predefinable excitation as a result of a change in a setpoint setting of one control loop (RK1) of the pair of control loops that are to be monitored, determining, on the basis of at least one section in each case of the sequences of actual-value data, the absolute value maximum of the cross-correlation function for positive time lag of the sequences of actual-value data of the respective other control loop (RK2) of the pair of control loops that are to be monitored as a first quantitative measure, and
    - as a function of the first quantitative measure, determining and displaying a parameter (KKF) for the purpose of evaluating an interaction effect of one control loop (RK1) on the other control loop (RK2).

11. Computer program containing program code instructions that are executable by means of a computer for the purpose of implementing the method according to claim 10 when the computer program is executed on a computer.

12. Computer program product, in particular a data medium or storage medium containing a computer program according to claim 11 that is executable by means of a computer.

**Revendications**

1. Dispositif de diagnostic pour contrôler le fonctionnement de circuits (RK1, RK2, RK3) de régulation d'un système d'automatisation, dans lequel le dispositif (D) de diagnostic est constitué pour mémoriser, dans une mémoire (DS) de données, des séquences de données de valeur réelle du circuit (RK1, RK2, RK3) de régulation à contrôler, **caractérisé par** un dispositif (AE) d'exploitation, constitué pour déterminer, lors d'une excitation donnée à l'avance ou pouvant l'être, par une modification d'une prescription de valeur de consigne de l'un des circuits (RK1) de régulation d'une paire de circuits (RK1, RK2) de régulation à contrôler, à l'aide d'au moins respectivement une partie des séquences de données de valeur réelle de la paire de circuits de régulation à contrôler, comme première cote, le maximum en valeur absolue de la fonction de corrélation croisée pour un décalage temporel positif de la séquence de données de valeur réelle de respectivement l'autre circuit (RK2) de régulation de la paire de circuits de régulation à contrôler et, en fonction de la première cote, déterminer et afficher une grandeur (KKF) caractéristique pour l'évaluation d'une interaction du un circuit (RK1) de régulation avec l'autre circuit (RK2) de régulation.

2. Dispositif de diagnostic suivant la revendication 1, **caractérisé en ce que** l'excitation donnée à l'avance ou pouvant l'être est un saut de valeur de consigne de niveau donné à l'avance ou pouvant l'être.

3. Dispositif de diagnostic suivant la revendication 1 ou 2, **caractérisé en ce que** des séquences de données de valeur de réglage des circuits (RK1, RK2, RK3) de régulation à contrôler peuvent être mémorisées dans la mémoire (DS) de données, **en ce que**, d'une manière analogue à la détermination de la première cote, une deuxième cote peut être déterminée à l'aide de données de valeur de réglage et **en ce que** le nombre (KKF) caractéristique est la moyenne arithmétique de la première cote et de la deuxième cote.

4. Dispositif de diagnostic suivant l'une des revendications précédentes, **caractérisé en ce qu'**un signal (W) d'alerte peut être émis si le nombre (KKF) caractéristique dépasse une valeur limite donnée à l'avance ou pouvant l'être.

5. Dispositif de diagnostic suivant l'une des revendications précédentes, **caractérisé en ce que** la polarité de la fonction de corrélation croisée calculée pour la détermination de la première cote est déterminé à son maximum en valeur absolue et **en ce que**, pour une polarité négative, on affiche une direction d'effet de même sens du un circuit (RK1) de régulation sur l'autre circuit (RK2) de régulation et, pour une polarité positive, une direction d'effet de sens contraire du un circuit (RK1) de régulation sur l'autre circuit (RK2) de régulation.

6. Dispositif de diagnostic suivant l'une des revendications précédentes, **caractérisé en ce qu'**une matrice (M) peut être affichée, dans laquelle des nombres ($KKF_{i,j}$, $i \neq j$) caractéristiques sont portés pour évaluer l'interaction du ième circuit de régulation des circuits de régulation à contrôle sur le jème circuit de régulation des circuits de régulation à contrôler.

7. Dispositif de diagnostic suivant la revendication 6, **caractérisé en ce que**, dans la matrice (M) peut être affiché une direction d'effet de même sens ou de sens contraire.

8. Dispositif de diagnostic suivant la revendication 6 ou 7, **caractérisé en ce qu'**à l'aide de la matrice (M), peuvent être déterminées et affichées des sommes de ligne des valeurs absolues des nombres caractéristiques.

9. Dispositif de diagnostic suivant l'une des revendications précédentes, **caractérisé en ce qu'**au moins la mémoire (DS) de données et le dispositif (AE) d'exploitation sont mis en oeuvre par logiciel sur un ordinateur remote service pour le télédiagnostic du circuit de régulation.

10. Procédé de diagnostic pour le contrôle du fonctionnement de circuits (RK1, RK2, RK3) de régulation d'un système d'automatisation, **caractérisé par** les stades suivants :

    - mémorisation respectivement d'une séquence de données de valeur réelle de deux circuits (RK1, RK2) de régulation d'une paire de circuits (RK1, RK2, RK3) de régulation à contrôler,
    - lors d'une excitation donnée à l'avance ou pouvant l'être par une modification d'une prescription de valeur de consigne du un circuit (RK1) de régulation de la paire de circuits de régulation à contrôler, à l'aide d'au moins respectivement une partie des séquences de données de valeur réelle, détermination du maximum en valeur absolue de la fonction de corrélation croisée pour un décalage temporel positif des séquences de données de valeur réelle de respectivement l'autre circuit (RK2) de régulation de la paire de circuits de régulation à contrôler, comme première cote et
    - en fonction de la première cote, détermination et affichage d'une grandeur (KKF) caractéristique pour l'évaluation d'une interaction du un circuit (RK1) de régulation avec l'autre circuit (RK2) de régulation.

11. Programme d'ordinateur ayant des instructions de côte de programme pouvant être réalisées sur un ordinateur pour la mise en oeuvre du procédé suivant la revendication 12, lorsque le programme d'ordinateur est réalisé sur un ordinateur.

12. Produit de programme d'ordinateur, notamment support de données ou support de mémoire, ayant un programme d'ordinateur suivant la revendication 11, pouvant être réalisé par un ordinateur.

# FIG 1

# FIG 2

# FIG 3

**EP 3 065 015 B1**

**IN DER BESCHREIBUNG AUFGEFÜHRTE DOKUMENTE**

**In der Beschreibung aufgeführte Patentdokumente**

- EP 1528447 B1
- DE 10212909 A1
- US 5838561 A